# EUROPEAN PATENT APPLICATION

(11) **EP 2 282 279 A1**
(43) Date of publication of application: **09.02.2011**
(21) Application number: 09165924.3
(22) Date of filing: 20.07.2009
(51) Int. Cl.: G06F 21/00

(54) **Method and device for detection of light attacks**

(71) Applicant: NXP B.V., 5656 AG Eindhoven (NL)
(72) Inventor: Schroeder, Juergen, 5656 AE, Eindhoven (NL)
(74) Representative: Krott, Michel

(57) **Abstract**

The invention relates to a method and a device for the detection of light attacks to integrated circuits, processors and/or electronic chips (2), preferably of smart cards, wherein an integrated circuit, a processor or an electronic chip (2) is provided, comprising a light sensitive element (3) for detecting light from external sources and generating a signal representing the detected light, such that a signal will be generated which represents the derivative of the intensity of the detected light as a function of time and the integrated circuit, processor or electronic chip compares the signal with a threshold signal such that in case the signal exceeds the threshold the light will be identified as attack and respective measures will be initiated.

## Description

### FIELD OF THE INVENTION

The invention relates to a method and a device for the detection of light attacks as claimed in claim 1 or in claim 5 respectively.

### BACKGROUND OF THE INVENTION

Smart cards are used e.g. in business for identification of the user of the smart card or for financial transactions. Therefore the smart cards carry sensitive information which should not be disclosed. Accordingly the data which are carried or used by the smart card is typically encrypted. Nevertheless such smart cards are subject to attacks to receive at least part of the data or pieces of information unauthorized from the user or owner of the smart card.

One example of such attacks is the light attack. During a light attack typically flashes of light are applied which should lead to initiating processes of the smart card which allow unauthorized access to confidential data.

Accordingly processes have been implemented which should in general lead to a higher degree of security not allowing unauthorized reception of confidential data. One example of such a method contains the implementation of a light sensitive sensor within the smart card which allows a surveillance of the light applied to the smart card and in case of applied light which exceeds a predetermined threshold value of the intensity of the light an alarm will be initiated which leads to a reset of the chip of the smart card or a stop of the functionality of the chip of the smart card at least for a predetermined time period.

US 2007/0246541 A1 discloses a device which contains a radiation alert dosimeter which changes color in proportion of the radiation energy received. Therefore due to the change of the color of the device the amount of energy received can be evaluated. In case a change of color has been detected the device can be changed or other measures for preventing radiation reception can be taken.

US 2008/0059826 Al discloses a cryptographic processing device which prevents statistical analyzation of secret data by means of analyzation of power consumption. The device generates an unpredictable clock signal which itself produces unpredictable temporary variations in power consumption. Therefore it is impossible to make a distinction between changes of power consumption from the original process or from the internal generated unpredictable signal.

US 2008/0135966 Al discloses a smart card which is formed of a memory having light-sensing cells to sense externally supplied light and to generate a detection signal in response to the externally supplied light being sensed by the light-sensing cells and a reset control circuit generating a reset signal in response to the detection signal, the reset signal operating to reset the smart card.

Hagai Bar-El, The Sorcerer's Apprentice Guide to Fault Attacks, Proceedings of the IEEE, Vol. 94, No. 2, February 2006, pages 370 - 382 describes typical methods for attacks of smart cards such as variations in supply voltage during execution, variations in the external clock, temperature variations, white light attacks due to induced photoelectric effects, laser induced effects and x-ray or ion beam induced effects.

### OBJECT AND SUMMARY OF THE INVENTION

It is an object of the invention to create a method and a device for the detection of light attacks e.g. on smart cards which allows a better detection of such light attacks and which finally leads to earlier or quicker activation counter measures.

The object of the invention regarding the device will be solved by a device according to the features of claim 1. The inventive device for the detection of light attacks to integrated circuits, processors and/or electronic chips, preferably of smart cards, includes an integrated circuit, a processor or an electronic chip is provided, furthermore comprising a light sensitive element for the detection of light or light flashes e.g. from external sources and generating a signal representing the detected light, such that a signal will be generated which represents the derivative of the intensity of the detected light as a function of time and the integrated circuit, processor or electronic chip compares the signal with a threshold signal such that in case the signal exceeds the threshold the light will be identified as attack and respective measures will be initiated. Such measures are e.g. performing a reset of the chip or processor or stopping them at least for a predetermined period of time. Therefore the applied attack doesn't lead to a retrieval of secret data.

According to the invention it is of advantage that the light sensitive element generates the signal which represents the derivative of the intensity of the detected light as a function of time. Therefore the light sensitive element itself produces the signal which should be evaluated. This leads to a reduced task of the chip or processor such that they can be designed more specific with respect to their tasks.

According to the invention it is of advantage that the integrated circuit, processor or electronic chip generates the signal which represents the derivative of the intensity of the detected light as a function of time. This allows the use of more simple or general light sensitive elements.

According to the invention it is very useful to restrict the detection to frequencies which differ from normal frequencies which do occur anyway with respect to artificial light in housings, offices etc. Therefore it is of advantage that the signal will be generated before or after filtering the incoming signal by means of a high-pass filter having a threshold frequency of 1 kHz, 10 kHz, 100 kHz, 1 MHz or 10 MHz.

The object of the invention regarding the method will be solved by a method according to the features of claim 5. The method for the detection of light attacks to integrated circuits, processors and/or electronic chips, preferably of smart cards, contains the following wherein an integrated circuit, a processor or an electronic chip is provided, comprising a light sensitive element for detecting light from external sources and generating a signal representing the detected light, such that a signal will be generated which represents the derivative of the intensity of the detected light as a function of time and the integrated circuit, processor or electronic chip compares the signal with a threshold signal such that in case the signal exceeds the threshold the light will be identified as attack and respective measures will be initiated.

According to the invention it is of advantage that the light sensitive element generates the signal which represents the derivative of the intensity of the detected light as a function of time.

According to the invention it is of advantage that the integrated circuit, processor or electronic chip generates the signal which represents the derivative of the intensity of the detected light as a function of time.

According to the invention it is of advantage that the signal will be generated before or after filtering the incoming signal by means of a high-pass filter having a threshold frequency of 1 kHz, 10 kHz, 100 kHz, 1 MHz or 10 MHz.

### BRIEF DESCRIPTION OF THE DRAWINGS

The above and other features and advantages of the invention will be apparent from the following description of an exemplary embodiment of the invention with reference to the accompanying drawings, in which:
Fig. 1 shows a schematic view of a smart card;
Fig. 2 shows a schematic diagram to explain the prior art technology; and
Fig. 3 shows a schematic diagram to explain the inventive method.

### DETAILED DESCRIPTION OF THE EMBODIMENTS

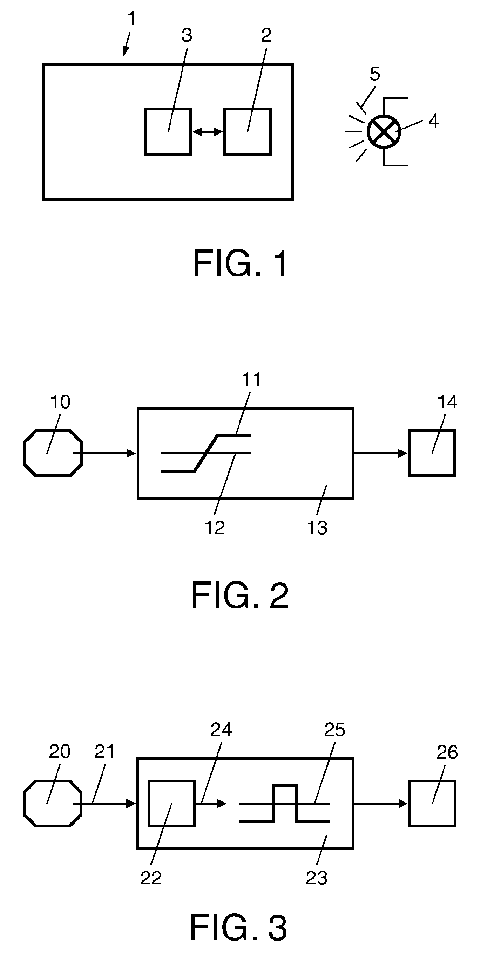

Fig. 1 shows schematically a smart card 1 which contains at least a chip 2 or processor which internally processes data and control signals. The smart card 1 and/or the chip 2 contains an interface for communication with other devices which are not specifically shown. Preferably the smart card 1 and/or the chip 2 contains a memory device for memorizing data for further processing or for further data exchange with other devices.

The smart card 1 contains a light sensitive element 3 like a light sensitive sensor. The light sensitive element 3 is connected to a circuit which allows supervision and control of the functionality of the chip of the smart card 1 and which allows issuing control commands to change function of the chip or processor of the smart card in case an abusive attack has been detected. Such change of function might be the issuance of a reset command or a stop of function command at least for a predetermined period of time, such as e.g. for 1 hour.

As can be seen from Fig. 1 a light source 4 is shown which is able to apply light as attacks to influence the chip 2 of the smart card 1 to allow unauthorized access to secret data of the chip1. The light source 4 might apply e.g. light flashes 5 to the semiconductor of the smart card chip 2 which might lead to wrong behaviour of the processor or chip 2 due to light induced photoelectric effects in order to disturb regular processing of the processor or chip 2 to allow access to the hidden secret data. Typically light flashes 5 are known which itself use the processor clock frequency to influence the processor to allow access to the secret data.

From prior art it is known to identify light attacks by means of generating a threshold value of intensity of the light flashes and the detected light will be compared in terms of intensity of the flash compared with the predetermined intensity threshold value. In the case that the detected intensity exceeds the threshold value an attack has been detected and the processor starts measures to increase the security of the system as explained above. This kind of security measures are schematically displayed in Fig. 2.

Fig. 2 shows a light sensitive element 10 which detects light emissions from external light sources. The element 10 sends a signal 11 to the processor or chip 13 of the device like the smart card which represents the intensity of the light detected. The processor or chip 13 compares the signal 11 with a predetermined threshold 12 value of the light and issues a command signal 14 to change behaviour of the chip or processor in case the signal 11 exceeds the predetermined threshold value 12 such that the light detected has been identified as attack.

Since it is very difficult to create sensor elements which are very sensitive to allow identification of light attacks and which are less sensitive to be used under normal light conditions such as daylight or artificial light from regular light sources which are typically used, the inventive device and method has been created.

The inventive device is schematically shown in Fig. 3. Fig. 3 shows a light sensitive element 20 which detects light emissions from external light sources. The element 20 sends a signal 21 to the processor or chip 23 of the device like the smart card which represents the intensity of the light detected. The processor or chip 23 crates in a stage 22 a signal which represents the derivative 24 of the signal 21 as a function of time. This derivative 24 represents the steepness of the increase of the signal 21. The chip or processor 23 compares the signal 24 with a predetermined threshold 25 value of the derivative of the intensity of the light and issues a command signal 26 to change behaviour of the chip or processor in case the signal 24 exceeds the predetermined threshold value 25 such that the light detected has been identified as attack.

Furthermore it is of advantage if the chip or processor 23 evaluates or calculates the frequency of the flashes of the detected light such that it allows a distinction between normal 50 - 60 Hz fluctuations of typical electric light of bulbs, neon tubes etc. from the surrounding or environment and high frequency flashes which are applied as abusive application. These high frequencies are typically in the range of 1 kHz and some 10 MHz because of the clock frequency of the processor itself. Therefore the high-pass filter should have a threshold frequency of 1 kHz, 10 kHz, 100 kHz, 1 MHz or 10 MHz.

Therefore it is one embodiment of the invention that the light sensitive element filters the light and cuts the low frequency content of the light such that a high pass filter has been implemented for the detected light.

According to another embodiment of the invention the light sensitive element sends all the data of the detected light to the chip or processor and the chip or processor filters the light and cuts the low frequency content of the light such that a high pass filter has been implemented for the detected light.

The invention has been described by way of a smart card as example only. The invention is not limited to be used with smart cards but although with other applications.

### REFERENCES:

smart card 1
electronic chip 2
light sensitive element 3
light source 4
light flash 5
light sensitive element 10
signal 11
threshold 12
processor, electronic chip 13
command signal 14
light sensitive element 20
signal 21
stage 22
processor, electronic chip 23
derivative 24
threshold 25
command signal 26

## Claims

1. Device for the detection of light attacks to integrated circuits, processors and/or electronic chips (2), preferably of smart cards (1), wherein an integrated circuit, a processor or an electronic chip is provided, comprising a light sensitive element (3) for detecting light from external sources and generating a signal representing the detected light, such that a signal will be generated which represents the derivative of the intensity of the detected light as a function of time and the integrated circuit, processor or electronic chip compares the signal with a threshold signal such that in case the signal exceeds the threshold the light will be identified as attack and respective measures will be initiated.

2. Device according to claim 1, **characterized in that** the light sensitive element generates the signal which represents the derivative of the intensity of the detected light as a function of time.

3. Device according to claim 1, **characterized in that** the integrated circuit, processor or electronic chip generates the signal which represents the derivative of the intensity of the detected light as a function of time.

4. Device according to claim 1 to 3, **characterized in that** the signal will be generated before or after filtering the incoming signal by means of a high-pass filter having a threshold frequency of 1 kHz, 10 kHz, 100 kHz, 1 MHz or 10 MHz.

5. Method for the detection of light attacks to integrated circuits, processors and/or electronic chips, preferably of smart cards (1), wherein an integrated circuit, a processor or an electronic chip (2) is provided, comprising a light sensitive element (3) for detecting light from external sources and generating a signal representing the detected light, such that a signal will be generated which represents the derivative of the intensity of the detected light as a function of time and the integrated circuit, processor or electronic chip compares the signal with a threshold signal such that in case the signal exceeds the threshold the light will be identified as attack and respective measures will be initiated.

6. Method according to claim 5, **characterized in that** the light sensitive element generates the signal which represents the derivative of the intensity of the detected light as a function of time.

7. Method according to claim 5, **characterized in that** the integrated circuit, processor or electronic chip generates the signal which represents the derivative of the intensity of the detected light as a function of time.

8. Method according to claim 5 to 7, **characterized in that** the signal will be generated before or after filtering the incoming signal by means of a high-pass filter having a threshold frequency of 1 kHz, 10 kHz, 100 kHz, 1 MHz or 10 MHz.
